(19) Europäisches Patentamt
European Patent Office
Office européen des brevets

(11) **EP 4 432 535 A1**

(12) **EUROPÄISCHE PATENTANMELDUNG**

(43) Veröffentlichungstag:
**18.09.2024   Patentblatt 2024/38**

(21) Anmeldenummer: **23161678.0**

(22) Anmeldetag: **14.03.2023**

(51) Internationale Patentklassifikation (IPC):
**H02M 1/14** (2006.01)        **H02M 1/32** (2007.01)
**H02M 3/07** (2006.01)        **H02M 7/5387** (2007.01)
**H02M 7/5395** (2006.01)

(52) Gemeinsame Patentklassifikation (CPC):
**H02M 1/14; H02M 1/32; H02M 3/07;**
**H02M 7/53871; H02M 7/5395;** H02M 3/073

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **Hartwig, Raphael**
  **92342 Freystadt (DE)**
• **Hensler, Alexander**
  **91466 Gerhardshofen (DE)**
• **Kiesel, Alexander**
  **82467 Garmisch-Partenkirchen (DE)**
• **Lahlou, Taha**
  **91052 Erlangen (DE)**

(74) Vertreter: **Siemens Patent Attorneys**
**Postfach 22 16 34**
**80506 München (DE)**

(54) **VERFAHREN ZUM BETRIEB EINES FLYING-CAPACITOR-MULTILEVEL-UMRICHTERS**

(57)    Die Erfindung betrifft ein Verfahren zum Betrieb eines Flying-Capacitor-Multilevel-Umrichters (1), umfassend mindestens eine Halbbrücke (HB1 bis HB3), umfassend einen oberen Zweig mit mehreren in Reihe geschalteten Halbleiterschaltern ($H_1$, $H_2$, $H_{(N-2)}$, $H_{(N-1)}$) und einen unteren Zweig mit mehreren in Reihe geschalteten Halbleiterschaltern ($L_1$, $L_2$, $L_{(N-2)}$, $L_{(N-1)}$), wobei der obere Zweig und der untere Zweig an einem Verbindungspunkt (VP) zum Anschluss einer Phase (P1, P2, P3) miteinander verbunden sind, wobei Paare aus je einem Halbleiterschalter ($H_1$, $H_2$, $H_{(N-2)}$, $H_{(N-1)}$, $L_1$, $L_2$, $L_{(N-2)}$, $L_{(N-1)}$) aus dem oberen und dem unteren Zweig mit gleichem Abstand zum Verbindungspunkt (VP) an ihren vom Verbindungspunkt (VP) weg weisenden Anschlüssen mit je einem Kondensator ($C_{FC1}$, $C_{FC2}$, $C_{FC(N-2)}$, $C_{DC}$) oder mit je einer Reihenschaltung von Kondensatoren ($C_{FC1}$, $C_{FC2}$, $C_{FC(N-2)}$, $C_{DC}$) überbrückt sind, wobei die Halbleiterschalter ($H_1$, $H_2$, $H_{(N-2)}$, $H_{(N-1)}$, $L_1$, $L_2$, $L_{(N-2)}$, $L_{(N-1)}$) mit pulsweitenmodulierten Signalen mit einer Schaltfrequenz ($f_{SW}$) angesteuert werden, wobei die Schaltfrequenz ($f_{SW}$) in einem Überlastfall kurzzeitig erhöht wird.

FIG 2

EP 4 432 535 A1

**Beschreibung**

Die Erfindung betrifft ein Verfahren zum Betrieb eines Flying-Capacitor-Multilevel-Umrichters.

Flying-Capacitor-Multilevel-Umrichter sind im Stand der Technik bekannt. Diese weisen sogenannte fliegende Kondensatoren (Flying Capacitors) auf, deren benötigte Kapazität die Leistungsdichte und die Kosten des Umrichters beeinflussen. Wird die Kapazität zu gering gewählt, steigt die Spannungswelligkeit (auch als Spannungsrippel bezeichnet) an diesen Kondensatoren an, wodurch auch die Spannungsbelastung an den Halbleiterschaltern ansteigt. Daher leidet die Zuverlässigkeit des Umrichters unter einer zu gering gewählten Kapazität und folglich einer zu hohen Spannungswelligkeit auf einer jeweiligen Kondensatorspannung über den fliegenden Kondensatoren.

Um einen zuverlässigen Flying-Capacitor-Multilevel-Umrichter zu dimensionieren, muss die Kapazität der Kondensatoren so ausgelegt werden, dass deren Kondensatorspannung im Betrieb lediglich geringfügig variiert, das heißt eine geringe Spannungswelligkeit aufweist. Wird diese Spannungswelligkeit zu groß, leidet die Zuverlässigkeit der Halbleiterschalter aufgrund einer erhöhten Spannungsbelastung. Hierfür wird bei bisher bekannten Lösungen eine minimal benötigte Kapazität des Kondensators auf den maximal möglichen Strom ausgelegt.

Der Erfindung liegt die Aufgabe zugrunde, ein neuartiges Verfahren zum Betrieb eines Flying-Capacitor-Multilevel-Umrichters anzugeben.

Die Aufgabe wird erfindungsgemäß gelöst durch ein Verfahren mit den Merkmalen des Anspruchs 1.

Vorteilhafte Ausgestaltungen der Erfindung sind Gegenstand der Unteransprüche.

Ein Flying-Capacitor-Multilevel-Umrichter weist mindestens eine Halbbrücke auf, umfassend einen oberen Zweig mit mehreren in Reihe geschalteten Halbleiterschaltern und einen unteren Zweig mit mehreren in Reihe geschalteten Halbleiterschaltern, wobei der obere Zweig und der untere Zweig an einem Verbindungspunkt zum Anschluss einer Phase miteinander verbunden sind, wobei Paare aus je einem Halbleiterschalter aus dem oberen und dem unteren Zweig mit gleichem Abstand zum Verbindungspunkt an ihren vom Verbindungspunkt weg weisenden Anschlüssen mit je einem Kondensator oder mit je einer Reihenschaltung von Kondensatoren überbrückt sind. In einem erfindungsgemäßen Verfahren zum Betrieb des Flying-Capacitor-Multilevel-Umrichters werden die Halbleiterschalter mit pulsweitenmodulierten Signalen mit einer Schaltfrequenz angesteuert, wobei die Schaltfrequenz in einem Überlastfall kurzzeitig erhöht wird. Wie lange ein kurzzeitiger Überlastfall dauert ist abhängig vom Überlastprofil. Typische Überlastprofile liegen im Bereich von Millisekunden bis Sekunden.

Durch die Verwendung der erfindungsgemäßen Lösung sind auch Überlastprofile mit einer hohen Überlast realisierbar, ohne den Umrichter überdimensionieren zu müssen.

Ein wesentlicher Vorteil der erfindungsgemäßen Lösung ist die Möglichkeit der Reduktion der benötigten Kapazität der Kondensatoren. Dadurch ergeben sich zum Beispiel bei einer Verdopplung der Schaltfrequenz für zweifache Überlast die folgenden Vorteile:

- Halbierung der benötigten Kapazität,
- Halbierung des Volumens der Kondensatoren (falls skalierbar beispielsweise mit MLCCs),
- Halbierung der Kosten für die Kondensatoren,
- Halbierung des Platzbedarfs und daher Erhöhung der Leistungsdichte sowie geringere Ausfallwahrscheinlichkeit durch weniger Komponenten,
- einfache Implementierung (linearer Anstieg der Schaltfrequenz mit der Leistung oder mit dem Istwert des Phasenstroms ab dem normalen Betriebspunkt, zum Beispiel Nennlast),
- falls sehr kurze, jedoch hohe Überlast benötigt wird, ist hierdurch eine einfache Realisierung ohne Überdimensionierung des Umrichters möglich, und
- Ermöglichung von sehr kurzen, jedoch hohen Überlastprofilen ohne eine Überdimensionierung des Umrichters.

In einer Ausführungsform des Verfahrens wird in einem normalen Betriebspunkt eine nominale Schaltfrequenz verwendet und die Schaltfrequenz wird im Überlastfall ausgehend vom normalen Betriebspunkt erhöht, beispielsweise linear erhöht, da die Schaltfrequenz linear in die Berechnung der benötigten Kapazität der fliegenden Kondensatoren eingeht.

In einer Ausführungsform ist oder wird der normale Betriebspunkt auf eine Nennleistung gelegt, könnte allerdings auch an eine andere Stelle verschoben werden.

In einer Ausführungsform ist vorgesehen, dass die Schaltfrequenz unterhalb des normalen Betriebspunktes konstant bleibt oder gehalten wird.

In einer Ausführungsform sind alle Paare aus je einem Halbleiterschalter aus dem oberen und dem unteren Zweig mit gleichem Abstand zum Verbindungspunkt an ihren vom Verbindungspunkt weg weisenden Anschlüssen mit je einem Kondensator oder mit je einer Reihenschaltung von Kondensatoren überbrückt, wobei die beiden am weitesten außen liegenden Halbleiterschalter aller Halbbrücken gemeinsam an ihren vom Verbindungspunkt weg weisenden Anschlüssen mit je einem nach Masse geschalteten DC-Link-Kondensator oder einer Reihenschaltung von nach Masse geschalteten DC-Link-Kondensatoren verbunden und an eine Versorgungsgleichspannung angeschlossen sind.

In einer Ausführungsform weist der Flying-Capacitor-Multilevel-Umrichter mindestens drei Halbbrücken zur Versorgung von drei Phasen auf.

In einer Ausführungsform sind die Phasen jeweils mit einer Induktivität und einem Filterbaustein zur Sicherstellung der elektromagnetischen Verträglichkeit beschaltet.

In einer Ausführungsform sind die Halbleiterschalter als IGBT oder Feldeffekttransistoren, insbesondere MOSFET oder GaN HEMT, ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1      eine schematische Ansicht eines typischen Aufbaus eines dreiphasigen Flying-Capacitor-Multilevel-Umrichters,

FIG 2      ein schematisches Diagramm einer Schaltfrequenz von Halbleiterschaltern des Umrichters in Abhängigkeit von einer normierten Leistung,

FIG 3      ein schematisches Diagramm einer beispielhaften Verlustaufteilung der Halbleiterschalter,

FIG 4      ein schematisches Diagramm von Schaltverlusten der Halbleiterschalter,

FIG 5      ein schematisches Diagramm von Gesamtverlusten der Halbleiterschalter, und

FIG 6      ein schematisches Diagramm eines beispielhaften Leistungsprofils eines Fahrwerks.

Einander entsprechende Teile sind in den Figuren mit denselben Bezugszeichen versehen.

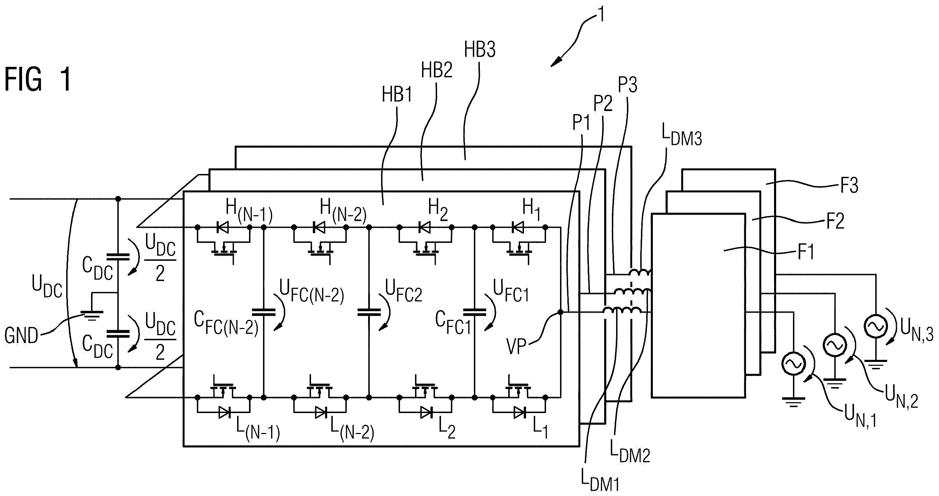

Figur 1 ist eine schematische Ansicht eines typischen Aufbaus eines als dreiphasiger Flying-Capacitor-Multilevel-Umrichter ausgebildeten Umrichters 1.

Der Umrichter 1 weist drei Halbbrücken HB1, HB2, HB3 auf, die je eine Phase P1, P2, P3 mit einer Wechselspannung $U_{N,1}$, $U_{N,2}$, $U_{N,3}$ versorgen. Jede der Halbbrücken HB1, HB2, HB3 weist einen oberen Zweig und einen unteren Zweig auf, zwischen denen die jeweilige Phase P1, P2, P3 angeschlossen ist.

Die Phasen P1, P2, P3 können jeweils mit einer Induktivität $L_{DM1}$, $L_{DM2}$, $L_{DM3}$ und einem Filterbaustein F1, F2, F3 zur Sicherstellung der elektromagnetischen Verträglichkeit (EMV) beschaltet sein.

Der obere Zweig weist eine Anzahl von in Reihe geschalteten oberen Halbleiterschaltern $H_1$, $H_2$, $H_{(N-2)}$, $H_{(N-1)}$ auf und der untere Zweig weist eine gleiche Anzahl von in Reihe geschalteten unteren Halbleiterschaltern $L_1$, $L_2$, $L_{(N-2)}$, $L_{(N-1)}$ auf. Die in Figur 1 gezeigte Anzahl ist lediglich beispielhaft gewählt. In anderen Ausführungsformen kann eine andere Anzahl von Halbleiterschaltern $H_1$, $H_2$, $H_{(N-2)}$, $H_{(N-1)}$, $L_1$, $L_2$, $L_{(N-2)}$, $L_{(N-1)}$ vorgesehen sein.

Die Halbleiterschalter $H_1$, $H_2$, $H_{(N-2)}$, $H_{(N-1)}$, $L_1$, $L_2$, $L_{(N-2)}$, $L_{(N-1)}$ sind beispielsweise als IGBT oder Feldeffekttransistoren, insbesondere MOSFET oder GaN HEMT, ausgebildet.

Im Kontext der vorliegenden Anmeldung wird der Begriff innerer Anschluss für denjenigen Anschluss eines Halbleiterschalters $H_1$, $H_2$, $H_{(N-2)}$, $H_{(N-1)}$, $L_1$, $L_2$, $L_{(N-2)}$, $L_{(N-1)}$ verwendet, der einem Verbindungspunkt VP der jeweiligen Halbbrücke HB1, HB2, HB3, an dem die jeweilige Phase P1, P2, P3 angeschlossen ist, zugewandt ist. Dementsprechend wird der Begriff äußerer Anschluss für denjenigen Anschluss eines Halbleiterschalters $H_1$, $H_2$, $H_{(N-2)}$, $H_{(N-1)}$, $L_1$, $L_2$, $L_{(N-2)}$, $L_{(N-1)}$ verwendet, der von dem Verbindungspunkt VP der jeweiligen Halbbrücke HB1, HB2, HB3 abgewandt ist.

Die beiden innersten Halbleiterschalter $H_1$, $L_1$, das heißt diejenigen Halbleiterschalter $H_1$, $L_2$ des oberen Zweigs und des unteren Zweigs, die mit ihren inneren Anschlüssen am Verbindungspunkt VP direkt miteinander und mit der jeweiligen Phase P1, P2, P3 verbunden sind, sind an ihren äußeren Anschlüssen mit einem Kondensator $C_{FC1}$, einem sogenannten fliegenden Kondensator (Flying Capacitor), überbrückt.

Die beiden nach außen hin, also vom Verbindungspunkt VP weg, nächsten Halbleiterschalter $H_2$, $L_2$ des oberen Zweigs und des unteren Zweigs sind an ihren äußeren Anschlüssen ebenfalls mit einem Kondensator $C_{FC2}$, einem sogenannten fliegenden Kondensator (Flying Capacitor), überbrückt. Ebenso sind mit Ausnahme der beiden am weitesten außen liegenden Halbleiterschalter $H_{(N-1)}$, $L_{(N-1)}$ alle um einen weiteren Schritt weiter außen liegenden Paare von Halbleiterschaltern $H_{(N-2)}$, $L_{(N-2)}$ an ihren äußeren Anschlüssen ebenfalls mit einem jeweiligen Kondensator $C_{FC(N-2)}$, einem sogenannten fliegenden Kondensator (Flying Capacitor), überbrückt.

Die beiden am weitesten außen liegenden Halbleiterschalter $H_{(N-1)}$, $L_{(N-1)}$ aller Halbbrücken HB1, HB2, HB3 sind gemeinsam an ihren äußeren Anschlüssen mit je einem nach Masse GND geschalteten DC-Link-Kondensator $C_{DC}$ verbunden. Die beiden DC-Link-Kondensatoren $C_{DC}$ sind daher in Reihe geschaltet und an eine Versorgungsgleichspannung $U_{DC}$ angeschlossen.

Die benötigte Kapazität der im Spannungspotential fliegenden Kondensatoren $C_{FC1}$, $C_{FC2}$, $C_{FC(N-2)}$ (Flying Capacitors) des Umrichters 1 definiert die Leistungsdichte und die Kosten des Umrichters 1. Wird die Kapazität zu gering gewählt, steigt die Spannungswelligkeit (auch als Spannungsrippel bezeichnet) an diesen Kondensatoren $C_{FC1}$, $C_{FC2}$, $C_{FC(N-2)}$ an, wodurch auch die Spannungsbelastung an den Halbleiterschaltern $H_1$, $H_2$, $H_{(N-2)}$, $H_{(N-1)}$, $L_1$, $L_2$, $L_{(N-2)}$, $L_{(N-1)}$ ansteigt. Daher leidet die Zuverlässigkeit des Umrichters 1 unter einer zu gering gewählten Kapazität und folglich einer zu hohen Spannungswelligkeit auf einer jeweiligen Kondensatorspannung $U_{FC1}$, $U_{FC2}$, $U_{FC(N-2)}$ über den fliegenden Kondensatoren $C_{FC1}$, $C_{FC2}$, $G_{FC(N-2)}$.

Um einen zuverlässigen Flying-Capacitor-Multilevel-Umrichter 1 zu dimensionieren muss die Kapazität der Kondensatoren $C_{FC1}$, $C_{FC2}$, $C_{FC(N-2)}$ so ausgelegt werden, dass deren Kondensatorspannung $U_{FC1}$, $U_{FC2}$, $U_{FC(N-2)}$ im Betrieb lediglich geringfügig variiert, das heißt eine geringe Spannungswelligkeit $\Delta U_{FC,max}$ aufweist. Wird diese Spannungswelligkeit $\Delta U_{FC,max}$ zu groß, leidet die Zuverlässigkeit der Halbleiterschalter $H_1$, $H_2$, $H_{(N-2)}$, $H_{(N-1)}$, $L_1$, $L_2$, $L_{(N-2)}$, $L_{(N-1)}$ aufgrund einer erhöhten Spannungsbelastung. Hierfür wird bei bisher bekannten Lösungen eine minimal benötigte Kapazität $C_{FC,min}$ des Kondensators $C_{FC1}$, $G_{FC2}$, $C_{FC(N-2)}$ auf den maximal möglichen Strom ausgelegt. Dies entspricht in der industriellen Anwendung dem Spitzenwert $I_{ac,pk}$ eines Überlaststroms gemäß Gleichung (1).

$$C_{FC,min} = \frac{I_{ac,pk}}{N_{FC} \cdot f_{SW} \cdot \Delta U_{FC,max}} \qquad (1)$$

$N_{FC}$ ist in Gleichung (1) eine Anzahl der Spannungslevel und $f_{SW}$ eine eingestellte Schaltfrequenz.

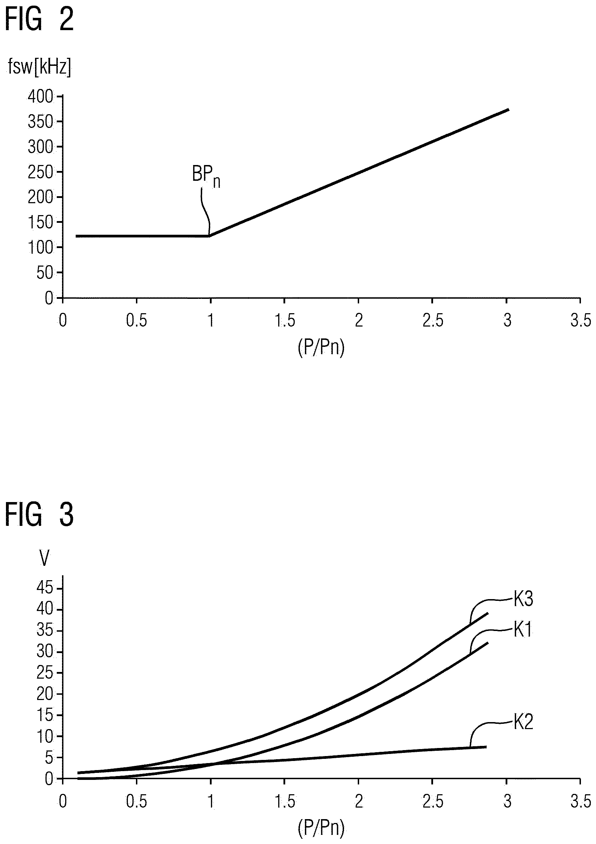

Gemäß der vorliegenden Erfindung wird vorgeschlagen, zur Reduktion dieser Kapazität (und zur dementsprechenden Reduktion von Kosten, Bauteilezahl und -volumen) für den Überlastfall die Schaltfrequenz $f_{SW}$ kurzzeitig zu erhöhen. Daraus resultieren für den Betriebspunkt des Überlastfalls erhöhte Verluste an den Halbleiterschaltern $H_1$, $H_2$, $H_{(N-2)}$, $H_{(N-1)}$, $L_1$, $L_2$, $L_{(N-2)}$, $L_{(N-1)}$. Da diese Verluste jedoch lediglich kurzzeitig anfallen, überwiegt der Vorteil einer reduzierten Kapazität. Die erhöhten Verluste sollten jedoch bei der Dimensionierung eines Kühlkörpers für die Halbleiterschalter $H_1$, $H_2$, $H_{(N-2)}$, $H_{(N-1)}$, $L_1$, $L_2$, $L_{(N-2)}$, $L_{(N-1)}$ berücksichtigt werden. Da die Schaltfrequenz $f_{SW}$ linear in die Berechnung der benötigten Kapazität mit eingeht, ist es vorteilhaft, die Schaltfrequenz $f_{SW}$ linear von einem gewählten normalen Betriebspunkt $BP_n$ aus zu erhöhen. Dies ist beispielhaft in Figur 2 dargestellt.

Figur 2 ist ein schematisches Diagramm der Schaltfrequenz $f_{SW}$ in Abhängigkeit von einer normierten Leistung P/Pn.

Der normale Betriebspunkt $BP_n$, ab dem die Schaltfrequenz $f_{SW}$ erhöht wird, ist in diesem Beispiel auf eine Nennleistung Pn gelegt worden, könnte allerdings auch an eine andere Stelle verschoben werden. Unterhalb des normalen Betriebspunktes $BP_n$ sollte die Schaltfrequenz $f_{SW}$ aufgrund der Filterauslegung nicht weiter reduziert werden, weshalb die Schaltfrequenz $f_{SW}$ in dem dargestellten Beispiel ab dieser Stelle konstant bleibt.

Dies hat nicht zwangsläufig eine Verdoppelung der Verluste an den Halbleiterschaltern $H_1$, $H_2$, $H_{(N-2)}$, $H_{(N-1)}$, $L_1$, $L_2$, $L_{(N-2)}$, $L_{(N-1)}$ zur Folge. In Figur 3 ist eine beispielhafte Verlustaufteilung der Halbleiterschalter $H_1$, $H_2$, $H_{(N-2)}$, $H_{(N-1)}$, $L_1$, $L_2$, $L_{(N-2)}$, $L_{(N-1)}$ dargestellt. Dabei sind die Verluste V in Abhängigkeit von der normierten Leistung P/Pn dargestellt. Kurve K1 zeigt Leitverluste, Kurve K2 zeigt Schaltverluste und Kurve K3 zeigt Gesamtverluste an den Halbleiterschaltern $H_1$, $H_2$, $H_{(N-2)}$, $H_{(N-1)}$, $L_1$, $L_2$, $L_{(N-2)}$, $L_{(N-1)}$.

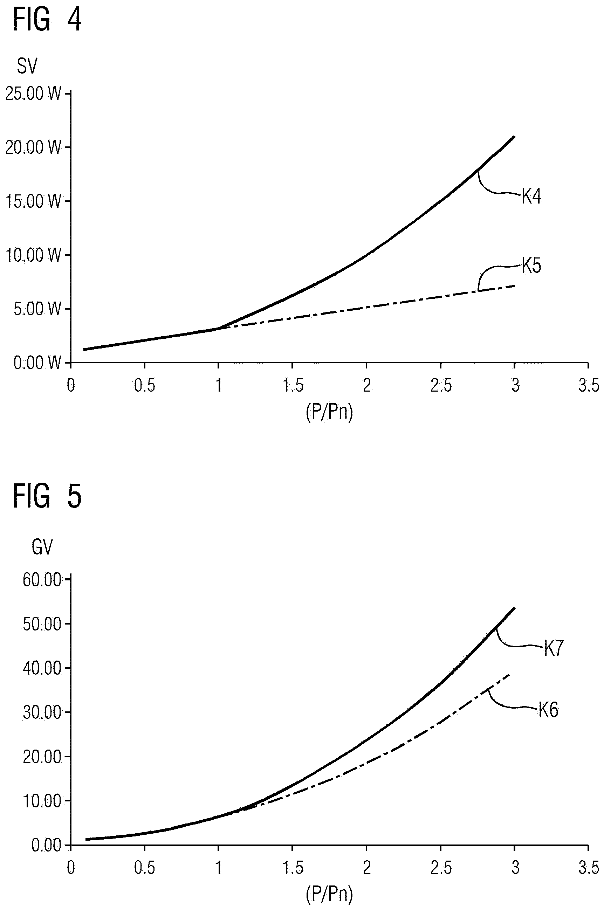

Es ist erkennbar, dass die Schaltverluste im Normalfall linear mit der Leistung P steigen, während die Leitverluste quadratisch mit der Leistung P ansteigen. Wird die Schaltfrequenz $f_{SW}$ linear erhöht, steigen demnach auch die Schaltverluste quadratisch. Dieser Vergleich der veränderten Schaltverluste SV ist in Figur 4 schematisch dargestellt. Dabei sind die Schaltverluste SV in Abhängigkeit von der normierten Leistung P/Pn dargestellt.

Kurve K4 zeigt die Schaltverluste SV der Halbleiterschalter $H_1$, $H_2$, $H_{(N-2)}$, $H_{(N-1)}$, $L_1$, $L_2$, $L_{(N-2)}$, $L_{(N-1)}$ ohne Schaltfrequenzanpassung. Kurve K5 zeigt die Schaltverluste SV der Halbleiterschalter $H_1$, $H_2$, $H_{(N-2)}$, $H_{(N-1)}$, $L_1$, $L_2$, $L_{(N-2)}$, $L_{(N-1)}$ mit der erfindungsgemäßen Schaltfrequenzanpassung, das heißt der linear ansteigenden Schaltfrequenz $f_{SW}$.

Für die Gesamtverluste ist diese Erhöhung allerdings gering. Figur 5 ist ein schematisches Diagramm der Gesamtverluste GV der Halbleiterschalter $H_1$, $H_2$, $H_{(N-2)}$, $H_{(N-1)}$, $L_1$, $L_2$, $L_{(N-2)}$, $L_{(N-1)}$ in Abhängigkeit von der normierten Leistung P/Pn. Kurve K6 zeigt die Gesamtverluste GV der Halbleiterschalter $H_1$, $H_2$, $H_{(N-2)}$, $H_{(N-1)}$, $L_1$, $L_2$, $L_{(N-2)}$, $L_{(N-1)}$ ohne Schaltfrequenzanpassung. Kurve K7 zeigt die Gesamtverluste GV der Halbleiterschalter $H_1$, $H_2$, $H_{(N-2)}$, $H_{(N-1)}$, $L_1$, $L_2$, $L_{(N-2)}$, $L_{(N-1)}$ mit der erfindungsgemäßen Schaltfrequenzanpassung, das heißt der linear ansteigenden Schaltfrequenz $f_{SW}$. Wie im Beispiel dargestellt werden sich bei dreifacher Überlast die Gesamtverluste GV lediglich um etwa 30% erhöhen, wobei die Kapazitäten der Kondensatoren $C_{FC1}$, $C_{FC2}$, $C_{FC(N-2)}$ um einen Faktor 3 geringer ausgelegt werden können. Folglich können für dieses Beispiel auch die Kosten und der Platzbedarf der Kondensatoren $C_{FC1}$, $C_{FC2}$, $G_{FC(N-2)}$ um den Faktor 3 reduziert werden.

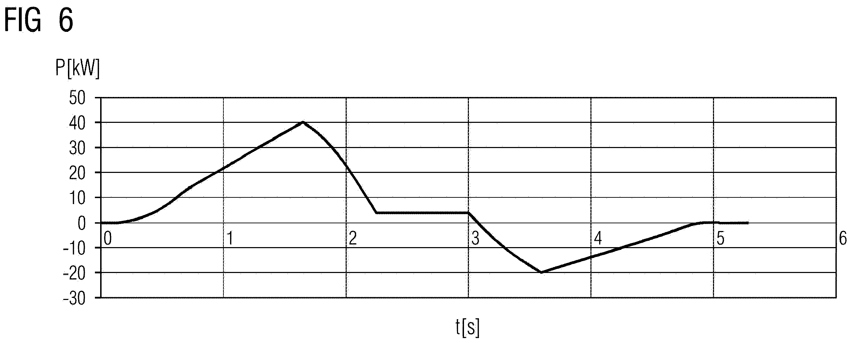

Besonders vorteilhaft ist eine solche Lösung, da bei typischen Leistungsprofilen von Positionierapplikationen oftmals sehr kurz andauernde, aber sehr hohe Überlasten auftreten. Figur 6 ist ein schematisches Diagramm eines beispielhaften Leistungsprofils eines Fahrwerks, wobei die Leistung P über der Zeit t dargestellt ist.

Wird die erfindungsgemäße Lösung nicht verwendet, müssen die Kondensatoren $C_{FC1}$, $G_{FC2}$, $G_{FC(N-2)}$ nach dem Stand der Technik immer auf diese hohen Überlastströme dimensioniert werden. Durch die Verwendung der erfindungsgemäßen Lösung sind auch sehr kurze Überlastprofile mit einer hohen Überlast realisierbar, ohne den Umrichter 1 stark überdimensionieren zu müssen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffs sind Personen mit männlicher, weiblicher oder anderer Geschlechteridentität mit umfasst.

## Patentansprüche

1. Verfahren zum Betrieb eines Flying-Capacitor-Multilevel-Umrichters (1), umfassend mindestens eine Halbbrücke (HB1 bis HB3), umfassend einen oberen Zweig mit mehreren in Reihe geschalteten Halbleiterschaltern ($H_1$, $H_2$, $H_{(N-2)}$, $H_{(N-1)}$) und einen unteren Zweig mit mehreren in Reihe geschalteten Halbleiterschaltern ($L_1$, $L_2$, $L_{(N-2)}$, $L_{(N-1)}$), wobei der obere Zweig und der untere Zweig an einem Verbindungspunkt (VP) zum Anschluss einer Phase (P1, P2, P3) miteinander verbunden sind, wobei Paare aus je einem Halbleiterschalter ($H_1$, $H_2$, $H_{(N-2)}$, $H_{(N-1)}$, $L_1$, $L_2$, $L_{(N-2)}$, $L_{(N-1)}$) aus dem oberen und dem unteren Zweig mit gleichem Abstand zum Verbindungspunkt (VP) an ihren vom Verbindungspunkt (VP) weg weisenden Anschlüssen mit je einem Kondensator ($C_{FC1}$, $C_{FC2}$, $C_{FC(N-2)}$, $C_{DC}$) oder mit je einer Reihenschaltung von Kondensatoren ($C_{FC1}$, $C_{FC2}$, $C_{FC(N-2)}$, $C_{DC}$) überbrückt sind, wobei die Halbleiterschalter ($H_1$, $H_2$, $H_{(N-2)}$, $H_{(N-1)}$, $L_1$, $L_2$, $L_{(N-2)}$, $L_{(N-1)}$) mit pulsweitenmodulierten Signalen mit einer Schaltfrequenz ($f_{SW}$) angesteuert werden, wobei die Schaltfrequenz ($f_{SW}$) in einem Überlastfall kurzzeitig erhöht wird.

2. Verfahren nach Anspruch 1, wobei in einem normalen Betriebspunkt ($BP_n$) eine nominale Schaltfrequenz ($f_{SW}$) verwendet wird und die Schaltfrequenz ($f_{SW}$) im Überlastfall ausgehend vom normalen Betriebspunkt ($BP_n$) erhöht wird.

3. Verfahren nach Anspruch 2, wobei der normale Betriebspunkt ($BP_n$) auf eine Nennleistung (Pn) gelegt ist oder wird.

4. Verfahren nach Anspruch 2 oder 3, wobei die Schaltfrequenz ($f_{SW}$) unterhalb des normalen Betriebspunktes ($BP_n$) konstant bleibt oder gehalten wird.

5. Verfahren nach einem der vorhergehenden Ansprüche, wobei alle Paare aus je einem Halbleiterschalter ($H_1$, $H_2$, $H_{(N-2)}$, $H_{(N-1)}$, $L_1$, $L_2$, $L_{(N-2)}$, $L_{(N-1)}$) aus dem oberen und dem unteren Zweig mit gleichem Abstand zum Verbindungspunkt (VP) an ihren vom Verbindungspunkt (VP) weg weisenden Anschlüssen mit je einem Kondensator ($C_{FC1}$, $C_{FC2}$, $C_{FC(N-2)}$, $C_{DC}$) oder mit je einer Reihenschaltung von Kondensatoren ($C_{FC1}$, $C_{FC2}$, $G_{FC(N-2)}$, $C_{DC}$) überbrückt sind, wobei die beiden am weitesten außen liegenden Halbleiterschalter ($H_{(N-1)}$, $L_{(N-1)}$) aller Halbbrücken (HB1, HB2, HB3) gemeinsam an ihren vom Verbindungspunkt (VP) weg weisenden Anschlüssen mit je einem nach Masse (GND) geschalteten DC-Link-Kondensator ($C_{DC}$) oder einer Reihenschaltung von nach Masse (GND) geschalteten DC-Link-Kondensatoren ($C_{DC}$) verbunden und an eine Versorgungsgleichspannung ($U_{DC}$) angeschlossen sind.

6. Verfahren nach einem der vorhergehenden Ansprüche, wobei der Flying-Capacitor-Multilevel-Umrichter (1) mindestens drei Halbbrücken (HB1, HB2, HB3) zur Versorgung von drei Phasen (P1, P2, P3) aufweist.

7. Verfahren nach einem der vorhergehenden Ansprüche, wobei die Phasen (P1, P2, P3) jeweils mit einer Induktivität ($L_{DM1}$, $L_{DM2}$, $L_{DM3}$) und einem Filterbaustein (F1, F2, F3) zur Sicherstellung der elektromagnetischen Verträglichkeit beschaltet sind.

8. Verfahren nach einem der vorhergehenden Ansprüche, wobei die Halbleiterschalter ($H_1$, $H_2$, $H_{(N-2)}$, $H_{(N-1)}$, $L_1$, $L_2$, $L_{(N-2)}$, $L_{(N-1)}$) als IGBT oder Feldeffekttransistoren, insbesondere MOSFET, ausgebildet sind.

FIG 1

EP 4 432 535 A1

FIG 2

fsw[kHz]

(P/Pn)

FIG 3

V

(P/Pn)

FIG 4

FIG 5

FIG 6

9

Europäisches
Patentamt

European
Patent Office

Office européen
des brevets

**EUROPÄISCHER RECHERCHENBERICHT**

Nummer der Anmeldung

**EP 23 16 1678**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KHAN WAQAR A ET AL: "An Optimized Phase Shifted PWM for Flying Capacitor Multilevel Converter", 2019 IEEE ENERGY CONVERSION CONGRESS AND EXPOSITION (ECCE), IEEE, 29. September 2019 (2019-09-29), Seiten 5104-5108, XP033666348, DOI: 10.1109/ECCE.2019.8912530 [gefunden am 2019-11-25] * Seite 5104 - Seite 5106; Abbildung 1 * ----- | 1-8 | INV. H02M1/14 H02M1/32 H02M3/07 H02M7/5387 H02M7/5395 |
| A | MCGRATH B P ET AL: "Natural capacitor voltage balancing for a flying capacitor converter induction motor drive", POWER ELECTRONICS SPECIALISTS CONFERENCE, 2008. PESC 2008. IEEE, IEEE, PISCATAWAY, NJ, USA, 15. Juni 2008 (2008-06-15), Seiten 1681-1687, XP031300210, ISBN: 978-1-4244-1667-7 * Abbildungen 1(a), 1(b); Tabelle III * ----- | 2-8 | |
| | | | **RECHERCHIERTE SACHGEBIETE (IPC)** |
| A | MALIDARREH PARISA BOODAGHI ET AL: "Capacitor Voltage Imbalance Reduction in Flying Capacitor Modular Multilevel Converters by using Model Predictive Control", 2020 11TH POWER ELECTRONICS, DRIVE SYSTEMS, AND TECHNOLOGIES CONFERENCE (PEDSTC), IEEE, 4. Februar 2020 (2020-02-04), Seiten 1-4, XP033769344, DOI: 10.1109/PEDSTC49159.2020.9088411 [gefunden am 2020-05-06] * Abbildungen 2, 3 * ----- | 2-8 | H02M |

Der vorliegende Recherchenbericht wurde für alle Patentansprüche erstellt

| Recherchenort | Abschlußdatum der Recherche | Prüfer |
|---|---|---|
| Den Haag | 17. August 2023 | Zeljkovic, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 .......................................................................................
& : Mitglied der gleichen Patentfamilie, übereinstimmendes Dokument

EPO FORM 1503 03.82 (P04C03)